# EUROPÄISCHE PATENTSCHRIFT

(11) **EP 0 770 865 B1**
(45) Veröffentlichungstag und Bekanntmachung des Hinweises auf die Patenterteilung: **02.01.2002**
(21) Anmeldenummer: 96810649.2
(22) Anmeldetag: 30.09.1996
(51) Int. Cl.: G01L 19/14, G01L 19/00, G01L 19/04

(54) **Instrumentierungsverschraubung**
Screwing of an instrumentation
Vissage d'une instrumentation

(30) Priorität: 26.10.1995 DE 19539782
(43) Veröffentlichungstag der Anmeldung: 02.05.1997
(73) Patentinhaber: ABB Turbo Systems AG, 5401 Baden (CH)
(72) Erfinder: Marder, Michael, 79862 Höchenschwand (DE)
(74) Vertreter: ABB Patent Attorneys

(56) Entgegenhaltungen:
- EP-A- 0 306 770
- DE-A- 4 308 720
- US-A- 3 584 900
- US-A- 3 920 048

## Beschreibung

### Technisches Gebiet

Die Erfindung betrifft eine Instrumentierungsverschraubung zur Ausführung von Messleitungen aus einem Druckbehälter.

### Stand der Technik

Vor allem bei der Neuentwicklung von thermischen Strömungsmaschinen werden umfangreich instrumentierte Versuchsträger eingesetzt. Die verwendeten Messleitungen, wie z.B. Thermoelemente oder Druckmessleitungen, müssen aus dem jeweiligen Versuchsträger, d.h. einem Druckbehälter, ausgeführt werden. Auch bei Seriengeräten werden solche Messleitungen eingesetzt. Zur deren Ausführung aus dem Druckbehälter sind Klemmringverschraubungen oder Flanschverbindungen mit relativ dikken Dichtungen bekannt.

Die bekannten Klemmringverschraubungen, z.B. der Firma Thermocoax, Frankreich, bestehen aus einem Einschraubstutzen mit beidseitigem Gewinde und einer Überwurfmutter, in deren Innenraum ein konischer Klemmring angeordnet ist. Der Innenraum weist ausserdem eine entsprechende konische Anlagefläche, die Überwurfmutter einen axialen Anschlag für den Klemmring auf. Wird die Überwurfmutter auf den Einschraubstutzen geschraubt, so presst deren axialer Anschlag den Klemmring gegen die konische Anlagefläche des Einschraubstutzens. Dadurch wird der Klemmring an die Messleitung gepresst, was letztere in der Verschraubung axial fixiert.

Eine spezielle Ausführungsform einer solchen Klemmringverschraubung ist in US-3,548,900 offenbart. Sie weist ein becherförmiges Fittinggehäuse auf, in das ein Anschlussstück eingeschraubt werden kann. Das Anschlussstück und der Boden des Fittinggehäuses sind mit einander gegenüberliegenden zentralen Bohrung zur Aufnahme einer Leitung versehen. Zwischen dem Anschlussstück und dem Boden des Fittinggehäuses ist konzentrisch zu den Bohrungen ein Hohlraum vorgesehen, der zur Aufnahme von zwei Pressklemmen dient, die ihrerseits zentrale Öffnungen für die Aufnahme der Leitung aufweisen. Die Pressklemmen sind auf ihrer dem Anschlussstück zugewandten Seite konisch sich verjüngent ausgebildet und wirken mit gegengleich ausgebildeten Wänden ihrer benachbarten Bauteile zusammen. Der Boden des Fittinggehäuses dient als axialer Anschlag für die Pressklemmen. Wird eine Leitung durch die zentralen Bohrungen und Öffnungen hindurchgeführt und das Anschlussstück in das Fittinggehäuse eingeschraubt so werden die Pressklemmen gegen den axialen Anschlag gedrückt und die sich konisch verjüngenden Seiten der Pressklemmen schieben sich entlang der gegengleich ausgebildeten Wände radial gegen die Leitungswand, halten diese fest umklammert und dichten zugleich die Öffnungen und Bohrungen ab.

Die Dichtigkeit solcher Verschraubungen ist als gut zu bezeichnen. Nachteilig wirkt sich jedoch aus, dass jeweils nur eine Messleitung mit dem Druckbehälter verschraubt werden kann. Ausserdem kann die Messleitung durch den Klemmring beschädigt werden. Daher ist diese Verschraubung sowohl material- als auch zeitaufwendig. Sie wird deshalb nur für kleinere Instrumentierungen mit weniger als 30 Messleitungen eingesetzt.

Mit einer Instrumentierungsverschraubung gemäss US 3,920,048, welche aus einem Gehäuse mit Innengewinde und einer Dichtungsvorrichtung aus mehreren O-Ringen besteht, ist die Verschraubung von nur einer Messleitung mit dem Druckbehälter möglich.

Demgegenüber werden pro Flanschverbindung häufig bis zu 40 Messleitungen aus dem Druckbehälter ausgeführt, wodurch die Materialkosten deutlich sinken. Auch der Montageaufwand kann gegenüber der Klemmringverschraubung verringert werden. Er ist jedoch immer noch relativ hoch. Durch Abknicken über dem Flansch können die Messleitungen auch bei dieser Verbindungs-Variante beschädigt werden. Ausserdem treten erhebliche Dichtigkeitsprobleme auf.

Bei der Montage der Messleitungen werden diese in der Regel mit den bereits montierten Steckern bzw. Kupplungen aus dem Druckbehälter ausgeführt. Um das zu ermöglichen müssen die bekannten Instrumentierungsdurchführungen grösser dimensioniert werden, als es für das Durchführen der Leitungen nötig wäre. Zudem weisen beide Varianten ohnehin einen erheblichen Platzbedarf auf, die Klemmringverschraubung wegen der grossen Anzahl von Einzelverschraubungen und die Flanschverbindung wegen der für die Abdichtung erforderlichen grossen Dichtfläche.

### Darstellung der Erfindung

Die Erfindung versucht, alle diese Nachteile zu vermeiden. Ihr liegt die Aufgabe zugrunde, eine druckdichte Instrumentierungsverschraubung für einen Druckbehälter zu schaffen, welche bei akzeptablen Materialkosten sowohl einen niedrigen Montageaufwand als auch einen geringen Platzbedarf aufweist und bei der die Messleitungen nicht beschädigt werden.

Erfindungsgemäss wird dies dadurch erreicht, dass bei einer Vorrichtung gemäss dem Oberbegriff des Anspruchs 1, in der Überwurfmutter sowohl der axiale Anschlag für den Klemmring als auch ein zweiter axialer Anschlag ausgebildet sind. Letzterer besitzt einen kleineren Innendurchmesser, als der erste Anschlag. Im Einschraubstutzen ist ein dritter, axialer Anschlag ausgebildet. Die Überwurfmutter und der Einschraubstutzen bilden einen gemeinsamen, axial vom zweiten und vom dritten Anschlag begrenzten Innenraum. Im Innenraum ist ein mehrteiliger Dichteinsatz angeordnet. Dieser besteht aus einem drucktragenden Vorderteil, einer Abschlussplatte, einer dazwischenliegenden Dichthülse, einem in der Dichthülse angeordneten und mit dieser korrespondierenden Dichtelement sowie dem Klemmring. Sowohl die Dichthülse als auch das Dichtelement werden aus einem, entsprechend den im Druckbehälter herrschenden Temperaturen, ausreichend hitzebeständigen, verformbaren Material gebildet. Der Klemmring ist zumindest teilweise auf der Dichthülse abgestützt. Der zweite Anschlag korrespondiert mit der Abschlussplatte und der dritte Anschlag mit dem Vorderteil. Sowohl im Vorderteil, in der Abschlussplatte als auch im Dichtelement sind der Grösse, Form und Anzahl der Messleitungen entsprechende, radiale Schlitze ausgebildet, welche axial aneinander ausgerichtet sind.

Entsprechend der Grösse der Instrumentierungsverschraubung und der Anzahl der radialen Schlitze können mit dieser Lösung vorteilhaft eine ganze Reihe von Messleitungen aus einer einzigen Öffnung des Druckbehälters ausgeführt werden. Gegenüber der Klemmringverschraubung bedeutet das eine erhebliche Verringerung der Anzahl von Verschraubungen, d.h. eine entscheidende Senkung des Montageaufwandes. Aufgrund der deutlich geringeren Anzahl von Verschraubungen wird auch der Platzbedarf verringert. Wegen des für die Aufnahme von mehreren Messleitungen erforderlichen Durchmessers der Instrumentierungsverschraubung ist es möglich, die Messleitungen mit den bereits montierten Steckern bzw. Kupplungen auszuführen, was den Montageaufwand weiter senkt. Da die Abdichtung im Inneren der Verschraubung erfolgt, ist diese auch wesentlich genauer und platzsparender zu realisieren als mit einer Flanschverbindung. Besonders vorteilhaft ist es, dass die Messleitungen gerade und knickfrei aus dem Druckbehälter ausgeführt werden und nicht in Kontakt mit dem Klemmring gelangen. Dadurch werden Beschädigungen an den Messleitungen verhindert.

Ein weiterer Vorteil ist die Funktionstrennung zwischen drucktragenden und den abdichtenden Bauteilen des Dichteinsatzes, d.h. zwischen dem Vorderteil und der Dichthülse einschliesslich des Dichtelementes. Erst dadurch können diese Bauteile entsprechend ihrer speziellen Funktion ausgelegt werden. Die Dichthülse und das Dichtelement bestehen somit aus einem verformbaren und entsprechend der Soll-Temperatur des Druckbehälters ausreichend hitzebeständigen Material. Deshalb kann die Instrumentierungsverschraubung in vielfältigen Anwendungsfällen eingesetzt werden. Bei Betriebstemperaturen über 500°C wird dazu Speckstein, bei Temperaturen unter 100°C Gummi und im Zwischenbereich von 100°C bis 500°C Reingraphit verwendet. Jedes dieser Materialien ist im angegebenen Temperaturbereich soweit verformbar, dass es die Messleitungen innig umschliesst und damit abdichtet.

Es ist besonders hervorzuheben, dass mit dem Klemmring, der Dichthülse und dem Dichtelement die preisgünstigsten Elemente der Instrumentierungsverschraubung Verschleissteile sind und die restlichen Bauteile wiederverwendet werden können.

Ferner ist es vorteilhaft, wenn die Abschlussplatte aus zwei Plattenabschnitten unterschiedlichen Aussendurchmessers besteht, wobei der Plattenabschnitt geringeren Aussendurchmessers an der Dichthülse und der Plattenabschnitt grösseren Aussendurchmessers am zweiten Anschlag anliegt. Aufgrund dieser Ausbildung ist bereits während der Montage eine Axialsicherung sowohl für das Dichtelement als auch für den Klemmring gewährleistet.

Schliesslich werden im Vorderteil, in der Abschlussplatte und im Dichtelement jeweils zwölf Schlitze ausgebildet und gleichmässig an deren Umfang verteilt. Dadurch können die Messleitungen gleichmässig in der Verschraubung angeordnet werden, was deren Montage wesentlich erleichtert.

### Kurze Beschreibung der Zeichnung

In der Zeichnung ist ein Ausführungsbeispiel der Erfindung anhand einer Instrumentierungsverschraubung für eine Brennkammer dargestellt.

Es zeigen:
- Fig. 1: eine Darstellung der Anordnung der Instrumentierungsverschraubung in der Brennkammer;
- Fig. 2: einen Längsschnitt durch die Verschraubung, vergrössert und um 90° gedreht dargestellt;
- Fig. 3: einen Schnitt III-III durch das Vorderteil des Dichteinsatzes;
- Fig. 4: einen Schnitt IV-IV durch die Dichthülse und das mit ihm korrespondierende Dichtelement;
- Fig. 5: einen Schnitt V-V durch die Abschlussplatte, im Bereich ihres Plattenabschnitts mit grösserem Aussendurchmesser.

Es sind nur die für das Verständnis der Erfindung wesentlichen Elemente gezeigt. Nicht dargestellt sind beispielsweise der Innenraum der Brennkammer und die mit den Messleitungen verbundenen Messgeräte.

### Weg zur Ausführung der Erfindung

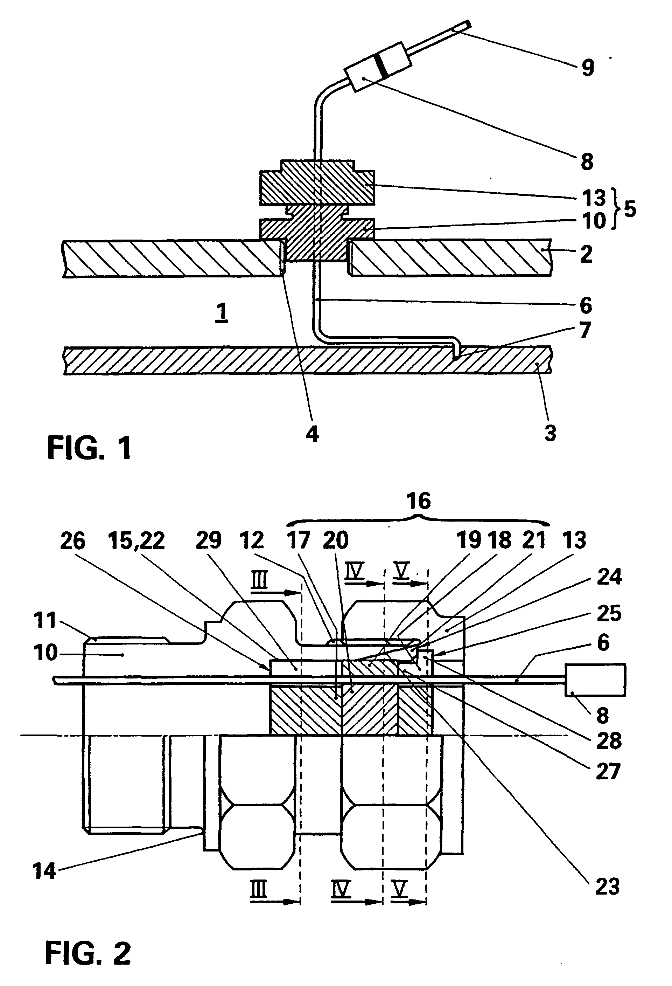

Die Fig. 1 zeigt ein Detail des als Brennkammer ausgebildeten Druckbehälters 1, mit einem Gehäuse 2 und einem innenliegenden Liner 3. In einem Gewindeloch 4 des Gehäuses 2 ist eine Instrumentierungsverschraubung 5 angeordnet. Diese nimmt zwölf Messleitungen 6 auf, von denen wegen besserer Übersichtlichkeit nur eine dargestellt ist. Das innere Ende der Messleitungen 6 bildet jeweils eine Messstelle 7 im Liner 3. Das äussere Ende ist über eine als Stecker ausgebildete Kupplung 8 mit einer Ausgleichsleitung 9 verbunden, welche zu einem nicht dargestellten Messgerät führt.

Die Instrumentierungsverschraubung 5 besteht aus einem Einschraubstutzen 10 mit zwei Aussengewinden 11, 12 und einer Überwurfmutter 13 (Fig. 2). Das erste Aussengewinde 11 ist mit dem Gewindeloch 4 des Gehäuses 2 und das zweite Aussengewinde 12 mit der Überwurfmutter 13 verbunden. Zwischen dem Einschraubstutzen 10 und dem Gehäuse 2 der Brennkammer 1 ist ein als Dichtkante ausgebildetes Abdichtmittel 14 angeordnet. Die Überwurfmutter 13 und der Einschraubstutzen 10 bilden einen gemeinsamen Innenraum 15, in dem ein mehrteiliger Dichteinsatz 16 angeordnet ist. Dieser besteht aus einem drucktragenden Vorderteil 17, einer Abschlussplatte 18, einer dazwischenliegenden Dichthülse 19, einem in der Dichthülse 19 angeordneten und mit dieser korrespondierenden Dichtelement 20 sowie einem konischen Klemmring 21. Sowohl die Dichthülse 19 als auch das Dichtelement 20 sind aus Speckstein gefertigt. Der Einschraubstutzen 10 besitzt eine zylindrische Innenfläche 22, welche in Richtung der Überwurfmutter 13 in eine konische Anlagefläche 23 für den Klemmring 21 ausläuft.

Die Instrumentierungsverschraubung 5 besitzt einen ersten, axialen Anschlag 24 für den Klemmring 21 und einen zweiten, axialen Anschlag 25. Beide Anschläge 24, 25 sind als innere Ansätze der Überwurfmutter 13 ausgebildet, wobei letzterer einen kleineren Innendurchmesser aufweist, als der erste Anschlag 24. Im Einschraubstutzen 10 ist ein dritter, axialer Anschlag 26 ausgebildet. Der gemeinsame Innenraum 15 von Überwurfmutter 13 und Einschraubstutzen 10 wird vom zweiten und vom dritten Anschlag 25, 26 axial begrenzt.

Der Klemmring 21 ist zumindest teilweise auf der Dichthülse 19 abgestützt. Der zweite Anschlag 25 korrespondiert mit der Abschlussplatte 18 und der dritte Anschlag 26 mit dem Vorderteil 17 des Dichteinsatzes 16. Die Abschlussplatte 18 besteht aus zwei Plattenabschnitten 27, 28 unterschiedlichen Aussendurchmessers, wobei der mit geringerem Aussendurchmesser ausgestattete Plattenabschnitt 27 axial an der Dichthülse 19 und der mit grösserem Aussendurchmesser ausgebildete Plattenabschnitt 28 axial am zweiten Anschlag 25 anliegt. Das Vorderteil 17 und die Dichthülse 19 weisen einen gleich grossen Aussendurchmesser auf und korrespondieren mit der Innenfläche 22 bzw. über den Klemmring 21 mit der Anlagefläche 23 des Einschraubstutzens 10. Der Aussendurchmesser des Plattenabschnitts 27 der Abschlussplatte 18 ist um ca. 0,1 mm kleiner als der Innendurchmesser des Klemmrings 21 ausgebildet, so dass bei der Montage der Abschlussplatte 18 ein Radialspiel gegenüber dem Klemmring 21 besteht.

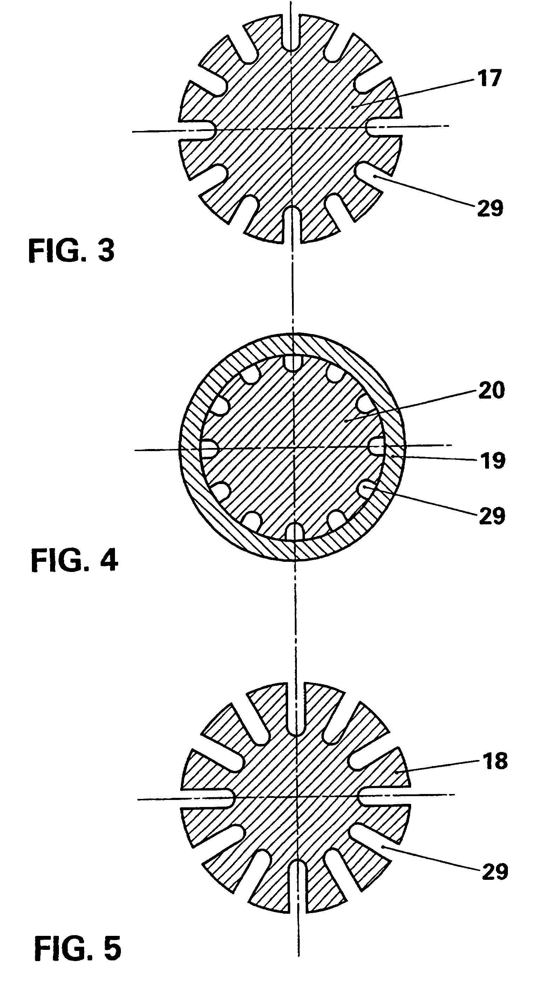

Sowohl im Vorderteil 17, in der Abschlussplatte 18 als auch im Dichtelement 20 sind jeweils zwölf, der Grösse und der Form der Messleitungen 6 entsprechende, radiale Schlitze 29 ausgebildet und axial aneinander ausgerichtet (Fig. 3 bis 5). Die Breite und die Tiefe der Schlitze 29 des Dichtelementes 20 ist so ausgebildet, dass die entsprechenden Messleitungen bündig aufgenommen werden. Demgegenüber sind die Schlitze 29 von Vorderteil 17 und Abschlussplatte 18 breiter und tiefer, so dass dort die Messleitungen 6 etwas Spiel gegenüber den Schlitzen 29 besitzen.

Je nach der Anzahl der aufzunehmenden Messleitungen 6 kann natürlich auch eine grössere bzw. kleinere Anzahl von radialen Schlitzen 29 ausgebildet werden. Dementsprechend wird entweder der Abstand der Schlitze 29 zueinander variiert oder eine grösser bzw. geringer dimensionierte Instrumentierungsverschraubung 5 eingesetzt.

Bei der Montage der Instrumentierungsverschraubung 5 wird zunächst der Einschraubstutzen 10 in das Gewindeloch 4 des Gehäuses 2 der Brennkammer 1 geschraubt. Er wird dabei mit Hilfe der Dichtkante 14 gegenüber der Brennkammer 1 metallisch abgedichtet. Danach werden die Messleitungen 6, durch den Einschraubstutzen 10 hindurch, aus der Brennkammer 1 ausgeführt. Unter gleichmässiger Anordnung der Messleitungen 6 am Umfang werden anschliessend zuerst das geschlitzte Vorderteil 17 und dann die Dichthülse 19, zusammen mit dem Klemmring 21, in den Einschraubstutzen 10 eingeschoben.

Danach wird das Dichtelement 20 bündig in die Dichthülse 19 gedrückt, wodurch die Messleitungen 6 bereits leicht fixiert werden. Anschliessend wird die Abschlussplatte 18 aufgesteckt und die Überwurfmutter 13 von Hand leicht aufgeschraubt. Damit sind sowohl das Dichtelement 20 als auch der Klemmring 21 gegen axiales Verrutschen und gegen Verkanten gesichert. Schliesslich erfolgt das Anziehen der Überwurfmutter 13 auf den Einschraubstutzen 10, wobei der gesamte Dichteinsatz 16 zusammengedrückt wird.

Während des Anziehens der Überwurfmutter 13 presst deren erster Anschlag 24 den konischen Klemmring 21 gegen die ebenfalls konische Anlagefläche 23 des Einschraubstutzens 10. Der Klemmring 21 wird dabei radial zusammengedrückt und drückt seinerseits die Dichthülse 19 radial gegen das Dichtelement 20. Die dazwischen befindlichen Messleitungen 6 werden vom verdrängten Speckstein ohne Beschädigung innig umschlossen und abgedichtet. Durch seine hohe Flächenpressung an der konischen Anlagefläche 23 des Einschraubstutzens 10 sichert der Klemmring 21 gleichzeitig die gesamte Instrumentierungsverschraubung 5 gegen Verdrehen. Daher ist keine separate Verdrehsicherung erforderlich. Abschliessend trifft der zweite Anschlag 25 auf den Plattenabschnitt 28 der Abschlussplatte 18 und drückt den gesamten Dichteinsatz 16 gegen den dritten, im Einschraubstutzen 10 angeordneten Anschlag 26. Dabei wird der Dichteinsatz 16 axial zusammengeschoben, so dass er seine Endstellung in der Instrumentierungsverschraubung 5 einnimmt.

Die Demontage der Instrumentierungsverschraubung 5 erfolgt in umgekehrter Reihenfolge. Der Klemmring 21, die Dichthülse 19 und das Dichtelement 20 sind Verschleissteile, die vor jedem neuen Zusammenbau ersetzt werden.

Das Material von Dichthülse 19 und Dichtelement 20, der weiche, verformbare Speckstein, ist aufgrund seiner Hitzebeständigkeit von über 1000°C als Dichtmaterial für Instrumentierungsverschraubungen 5 an einer Brennkammer 1 besonders geeignet. Natürlich ist eine solche Instrumentierungsverschraubung 5 auch für den Hochdruckteil einer Gasturbine oder für Abgasturbolader verwendbar.

Sind, wie z.B. beim Niederdruckteil einer Dampfturbine im Bereich der Verschraubung Temperaturen von unter 100°C zu erwarten kann Gummi als Dichtwerkstoff eingesetzt werden. Bei Gasverdichtern mit Temperaturen von 100°C bis 500°C wird Reingraphit verwendet.

### Bezugszeichenliste

- 1: Druckbehälter, Brennkammer
- 2: Gehäuse
- 3: Liner
- 4: Gewindeloch
- 5: Instrumentierungsverschraubung, Verschraubung
- 6: Messleitung
- 7: Messstelle
- 8: Kupplung, Stecker
- 9: Ausgleichsleitung
- 10: Einschraubstutzen
- 11: Aussengewinde, erstes
- 12: Aussengewinde, zweites
- 13: Überwurfmutter
- 14: Abdichtmittel, Dichtkante
- 15: Innenraum
- 16: Dichteinsatz
- 17: Vorderteil
- 18: Abschlussplatte
- 19: Dichthülse
- 20: Dichtelement
- 21: Klemmring, konisch
- 22: Innenfläche, zylindrisch
- 23: Anlagefläche, konisch
- 24: axialer Anschlag, erster
- 25: axialer Anschlag, zweiter
- 26: axialer Anschlag, dritter
- 27: Plattenabschnitt mit geringerem Aussendurchmesser
- 28: Plattenabschnitt mit grösserem Aussendurchmesser
- 29: Schlitz

## Patentansprüche

1. Instrumentierungsverschraubung (5) zur Befestigung zumindest einer, aus einem Druckbehälter (1) auszuführenden Messleitung (6) in einem Gehäuse (2) des Druckbehälters (1), bestehend aus
a) einem Einschraubstutzen (10) mit zwei Aussengewinden (11, 12) und einer Überwurfmutter (13), wobei das erste Aussengewinde (11) mit einem Gewindeloch (4) des Gehäuses (2) und das zweite Aussengewinde (12) mit der Überwurfmutter (13) verbunden ist,
b) einem Abdichtmittel (14) zwischen dem Einschraubstutzen (10) und dem Gehäuse (2),
c) einem im Inneren der Instrumentierungsverschraubung (5) angeordneten, konischen Klemmring (21) sowie einem axialen Anschlag (24) und einer konischen Anlagefläche (23) für den Klemmring (21),
**dadurch gekennzeichnet, dass**
d) der axiale Anschlag (24) für den Klemmring (21) und ein zweiter axialer Anschlag (25) in der Überwurfmutter (13) ausgebildet sind, wobei letzterer einen kleineren Innendurchmesser aufweist, als der erste Anschlag (24),
e) im Einschraubstutzen (10) ein dritter, axialer Anschlag (26) ausgebildet ist,
f) die Überwurfmutter (13) und der Einschraubstutzen (10) einen gemeinsamen, axial vom zweiten und vom dritten Anschlag (25, 26) begrenzten Innenraum (15) bilden,
g) im Innenraum (15) ein mehrteiliger Dichteinsatz (16) angeordnet ist, welcher aus einem drucktragenden Vorderteil (17), einer Abschlussplatte (18), einer dazwischenliegenden Dichthülse (19), einem in der Dichthülse (19) angeordneten und mit dieser korrespondierenden Dichtelement (20) sowie dem Klemmring (21) besteht,
h) sowohl die Dichthülse (19) als auch das Dichtelement (20) aus einem hitzebeständigen, verformbaren material bestehen,
i) der Klemmring (21) zumindest teilweise auf der Dichthülse (19) abgestützt ist,
j) der zweite Anschlag (25) mit der Abschlussplatte (18) und der dritte Anschlag (26) mit dem Vorderteil (17) korrespondieren,
k) sowohl im Vorderteil (17), in der Abschlussplatte (18) als auch im Dichtelement (20) der Grösse, Form und Anzahl der Messleitungen (6) entsprechende, radiale Schlitze (29) ausgebildet und axial aneinander ausgerichtet sind.

2. Instrumentierungsverschraubung nach Anspruch 1, **dadurch gekennzeichnet, dass** die Abschlussplatte (18) aus zwei Plattenabschnitten (27, 28) unterschiedlichen Aussendurchmessers besteht, wobei der Plattenabschnitt geringeren Aussendurchmessers (27) an der Dichthülse (19) und der Plattenabschnitt grösseren Aussendurchmessers (28) am zweiten Anschlag (25) anliegt.

3. Instrumentierungsverschraubung nach Anspruch 1 oder 2, **dadurch gekennzeichnet, dass** die Dichthülse (19) und das Dichtelement (20) aus Speckstein bestehen.

4. Instrumentierungsverschraubung nach Anspruch 1 oder 2, **dadurch gekennzeichnet, dass** die Dichthülse (19) und das Dichtelement (20) aus Reingraphit bestehen.

5. Instrumentierungsverschraubung nach Anspruch 1 oder 2, **dadurch gekennzeichnet, dass** die Dichthülse (19) und das Dichtelement (20) aus Gummi bestehen.

6. Instrumentierungsverschraubung nach einem der Ansprüche 1 bis 5, **dadurch gekennzeichnet, dass** im Vorderteil (17), in der Abschlussplatte (18) und im Dichtelement (20) jeweils zwölf Schlitze (19) angeordnet und gleichmässig an deren Umfang verteilt sind.

## Claims

1. Screwed instrumentation fitting (5) for the fastening of at least one measuring line (6), to be led out of a pressure vessel (1), in a casing (2) of the pressure vessel (1), comprising
a) a screw-in socket (10) having two external threads (11, 12) and a cap nut (13), the first external thread (11) being connected to a tapped hole (4) in the casing (2) and the second external thread (12) being connected to the cap nut (13),
b) a sealing means (14) between the screw-in socket (10) and the casing (2),
c) a conical clamping ring (21), arranged in the interior of the screwed instrumentation fitting (5), as well as an axial stop (24) and a conical bearing surface (23) for the clamping ring (21),
**Characterized in that**
d) the axial stop (24) for the clamping ring (21) and a second axial stop (25) are formed in the cap nut (13), the latter stop (25) having a smaller inside diameter than the first stop (24),
e) a third axial stop (26) is formed in the screw-in socket (10),
f) the cap nut (13) and the screw-in socket (10) form a common interior space (15) bounded axially by the second and third stops (25, 26),
g) a multi-piece sealing insert (16) is arranged in the interior space (15), which sealing insert (16) comprises a pressure-bearing front part (17), an end plate (18), a sealing sleeve (19) in between, a sealing element (20) arranged in and corresponding to said sealing sleeve (19), and also the clamping ring (21),
h) both the sealing sleeve (19) and the sealing element (20) are made of a heat-resistant, deformable material,
i) the clamping ring (21) is supported at least partly on the sealing sleeve (19),
j) the second stop (25) corresponds to the end plate (18) and the third stop (26) corresponds to the front part (17),
k) radial slots (29) corresponding to the size, shape and number of measuring lines (6) are formed and axially oriented with respect to one another in the front part (17), in the end plate (18) and in the sealing element (20).

2. Screwed instrumentation fitting according to Claim 1, **characterized in that** the end plate (18) comprises two plate sections (27, 28) of different outside diameter, the plate section of smaller outside diameter (27) bearing against the sealing sleeve (19) and the plate section of larger outside diameter (28) bearing against the second stop (25).

3. Screwed instrumentation fitting according to Claim 1 or 2, **characterized in that** the sealing sleeve (19) and the sealing element (20) are made of steatite.

4. Screwed instrumentation fitting according to Claim 1 or 2, **characterized in that** the sealing sleeve (19) and the sealing element (20) are made of pure graphite.

5. Screwed instrumentation fitting according to Claim 1 or 2, **characterized in that** the sealing sleeve (19) and the sealing element (20) are made of rubber.

6. Screwed instrumentation fitting according to one of Claims 1 to 5, **characterized in that** twelve slots (19) are arranged in the front part (17), in the end plate (18) and in the sealing element (20) respectively and are uniformly distributed at their periphery.

## Revendications

1. Raccord vissé d'instrumentation (5) pour fixer au moins une ligne de mesure (6) sortant d'un réservoir sous pression (1) dans un corps (2) du réservoir sous pression (1), constitué
(a) d'une tubulure filetée (10) avec deux filets externes (11, 12) et un écrou à chapeau (13), le premier filet externe (11) étant raccordé à un trou fileté (4) du corps (2) et le deuxième filet extérieur (12) étant raccordé à l'écrou à chapeau (13);
(b) d'un moyen d'étanchéité(14) entre la tubulure filetée (10) et le corps (2),
(c) d'une bague de serrage conique (21) disposée à l'intérieur du raccord vissé d'instrumentation (5) ainsi que d'une butée axiale (24) et d'une surface d'application conique (23) pour la bague de serrage (21),
**caractérisé en ce que**
(d) la butée axiale (24) pour la bague de serrage (21) et une deuxième butée axiale (25) sont formées dans l'écrou à chapeau (13), cette dernière présentant un diamètre interne plus petit que celui de la première butée (24),
(e) dans la tubulure filetée (10) est formée une troisième butée axiale (26),
(f) l'écrou à chapeau (13) et la tubulure filetée (10) forment un espace intérieur (15) commun limité axialement par la deuxième et la troisième butées (25, 26),
(g) dans l'espace interne (15) est disposé un insert d'étanchéité en plusieurs parties (16), qui est constitué d'une partie avant (17) porteuse de pression, d'une plaque de fermeture (18), d'une douille d'étanchéité intermédiaire (19), d'un élément d'étanchéité (20) disposé dans la douille d'étanchéité (19) et correspondant à celle-ci ainsi qu'à la bague de serrage (21),
(h) aussi bien la douille d'étanchéité (19) que l'élément d'étanchéité (20) sont constitués d'un matériau déformable résistant à la chaleur,
(i) la bague de serrage (21) est appuyée au moins partiellement sur la douille d'étanchéité (19),
(j) la deuxième butée (25) correspond à la plaque de fermeture (18) et la troisième butée (26) correspond à la partie avant (17),
(k) aussi bien dans la partie avant (17), dans la plaque de fermeture (18) que dans l'élément d'étanchéité (20) sont formées des fentes radiales (29) correspondant à la grandeur, à la forme et au nombre des lignes de mesure (6), lesdites fentes (29) étant orientées l'une à côté de l'autre axialement.

2. Raccord vissé d'instrumentation selon la revendication 1, **caractérisé en ce que** la plaque de fermeture (18) est constituée de deux sections de plaque (27, 28) de diamètres extérieurs différents, la section de plaque de moindre diamètre extérieur (27) s'appliquant sur la douille d'étanchéité (19) et la section de plaque de diamètre extérieur plus grand (28) s'appliquant sur la deuxième butée (25).

3. Raccord vissé d'instrumentation selon la revendication 1 ou 2, **caractérisé en ce que** la douille d'étanchéité (19) et l'élément d'étanchéité (20) sont constitués de stéatite.

4. Raccord vissé d'instrumentation selon la revendication 1 ou 2, **caractérisé en ce que** la douille d'étanchéité (19) et l'élément d'étanchéité (20) sont constitués de graphite pur.

5. Raccord vissé d'instrumentation selon la revendication 1 ou 2, **caractérisé en ce que** la douille d'étanchéité (19) et l'élément d'étanchéité (20) sont constitués de caoutchouc.

6. Raccord vissé d'instrumentation selon l'une quelconque des revendications 1 à 5, **caractérisé en ce que**, dans la partie avant (17), dans la plaque de fermeture (18) et dans l'élément d'étanchéité (20) sont disposés à chaque fois douze fentes (29) qui sont réparties uniformément sur la périphérie.
